# EUROPEAN PATENT APPLICATION

(11) **EP 2 502 980 A1**
(43) Date of publication of application: **26.09.2012**
(21) Application number: 11159799.3
(22) Date of filing: 25.03.2011
(51) Int. Cl.: C11D 3/02, C11D 11/02

(54) **Spray-dried laundry detergent particles**

(71) Applicant: The Procter & Gamble Company, Cincinnati, OH 45202 (US)
(72) Inventor: Tantawy, Hossam Hassan, Northumberland, NE61 3JT (GB); Latimer, Andrew, Tyne & Wear, NE23 7JP (GB); Patton, Andrew Brian Greenaway, County Durham, DH8 9NN (GB)
(74) Representative: Howard, Phillip Jan

(57) **Abstract**

Spray-dried laundry detergent particles comprising:
(a) organic detersive surfactant;
(b) inorganic salt;
(c) essentially no zeolite builder;
(d) essentially no phosphate builder;
(e) essentially no bleach; and
(f) other detergent ingredients,

wherein from 5wt% to 25wt% of the particles are small particles having a particle size of less than 250 micrometers,
wherein from 75wt% to 95wt% of the particles are large particles having a particle size of 250 micrometers or greater, and
wherein the ratio of the organic carbon content of the small particles in weight percent to the organic carbon content of the large particles in weight percent is in the range of from 1.00 to 1.20.

## Description

### FIELD OF THE INVENTION

The present invention relates to spray-dried laundry detergent particles. The spray-dried laundry detergent particles of the present invention exhibit good bulk handling characteristics, and have low bulk density variation during plant packaging operations.

### BACKGROUND OF THE INVENTION

Laundry detergent powders are typically produced by a spray-drying process wherein a detergent-slurry is spray-dried to form spray-dried laundry detergent particles. These spray-dried particles are the base detergent particles to which other particles may be added to form a fully formulated laundry detergent powder; for example: enzyme prills, bleach particles, perfume particles and the like. The fully formulated laundry detergent powder is then packaged, for example into cartons, and shipped to trade. Some packaging operations are volumetric-based; however, the cartons are sold on a weight-basis. This means that variations in the bulk density of the laundry detergent powder must be compensated for in order to ensure that the carton weight at the point of sale is correct for the consumer. Typically, detergent manufacturers have to over-pack the carton with laundry detergent powder in order to compensate for any variation in the laundry detergent powder bulk density.

There is a need for laundry detergent powders that exhibit excellent solubility and environmental profiles. To meet this need, recent trends in the laundry detergent industry are for laundry detergent powder formulation approaches having significantly reduced levels of water-insoluble materials like zeolite builder, and phosphate builder. However, laundry detergent powders based on spray-dried laundry detergent particles that are essentially free of zeolite and phosphate builder exhibit excessive bulk density variation during the packaging operation in the manufacturing plant. This necessitates the need for laundry detergent manufacturers to increase the level of over-pack to compensate for this increase in bulk density variation, which in turn decreases the efficiency of the laundry powder production process.

The inventors have found that laundry detergent powders based on spray-dried particles that are essential free of zeolite and phosphate builder are more responsive to applied stress loads, and the powder undergoes more variation in bulk density due to the forces they experience (plant stresses) during plant handling operations, especially in the packaging machines.

Spray dried laundry detergent particles are not uniform in size: i.e. they have a particle size distribution. Typically, this distribution is from 50 micrometers to 1,200 micrometers, and typically having a weight average particle size in the range of from 350 micrometers to 450 micrometers. The chemical composition of low-built, and especially unbuilt, spray-dried particles is not uniform across this particle size distribution; the chemical composition changes as the spray-dried particle size changes, particular differences in the chemical composition occur between small spray-dried particles (e.g. having a particle size of less than 250 micrometers) and large spray-dried particles (e.g. having a particle size of 250 micrometers or more). The inventors have found that the bulk powder properties of the fully formulated laundry detergent powder are significantly influenced by the small spray-dried particles (fines) having particle sizes below 250 micrometers. The inventors have also found that the organic carbon content in these fines is higher than the organic carbon content of the larger spray-dried particles. Furthermore, the inventors have found that reducing the variation in the organic carbon content across the large and small spray-dried particles, improves the bulk powder properties of the fully formulated laundry detergent powder, which in turn overcomes the need for excessive over-packing of the cartons. In addition, this approach avoids the need to remove these fine particles from the rest of the spray-dried laundry detergent particle population. Removal of these fines is difficult to handle in a manufacturing plant: high volume recycle streams result in lower process yields and poorer process reliability (e.g. fine particulate material having a high organic content can block plant screw feeders).

### SUMMARY OF THE INVENTION

The present invention relates to: spray-dried laundry detergent particles comprising: (a) organic detersive surfactant; (b) inorganic salt; (c) essentially no zeolite builder; (d) essentially no phosphate builder; (e) essentially no bleach; and (f) other detergent ingredients, wherein from 5wt% to 25wt% of the particles are small particles having a particle size of less than 250 micrometers, wherein from 75wt% to 95wt% of the particles are large particles having a particle size of 250 micrometers or greater, and wherein the ratio of the organic carbon content of the small particles in weight percent to the organic carbon content of the large particles in weight percent is in the range of from 1.00 to 1.20.

### DETAILED DESCRIPTION OF THE INVENTION

The spray-dried laundry detergent particles comprise: (a) organic detersive surfactant; (b) inorganic salt; (c) essentially no zeolite builder; (d) essentially no phosphate builder; (e) essentially no bleach; and (f) other detergent ingredients. These detergent ingredients are described in more detail later.

Typically, from 5wt% to 25wt%, preferably from 10wt% to 20wt% of the spray-dried laundry detergent particles are small particles having a particle size of less than 250 micrometers. Typically, from 75wt% to 95wt%, preferably from 80wt% to 90wt% of the particles are large particles having a particle size of 250 micrometers or greater. Typically, the ratio of the organic carbon content of the small particles in weight percent to the organic carbon content of the large particles in weight percent is in the range of from 1.00 to 1.20, preferably to 1.15, or to 1.12, or to 1.10, or to 1.08, or even to 1.05.

Within the meaning of the present invention, organic means hydrocarbon containing, and inorganic means non-hydrocarbon containing. The organic carbon content can be determined by any conventional means. Suitable means include acid treatment (for example 2N H₂SO₄ - 5%v/vFeSO₄) to remove inorganic carbon content, followed by sample drying and high temperature (for example at 1350°C) dry combustion in a pure oxygen environment to evolve carbon dioxide, which can be collected and quantitatively determined by any suitable means, such as gas volumetric, infra-red or thermal conductivity analysis.

The organic carbon content of the small particles can be controlled by the particle size of the inorganic salt. Preferably, the inorganic salt has a very small particle size, preferably having a volume average particle size of from 10 micrometers to 80 micrometers, preferably from 20 micrometers, or from 30 micrometers, and preferably to 60 micrometers, or even to 50 micrometers. The volume average particle size of the inorganic salt can be determined by any conventional means, such as light scattering, for example using a sympatec particle size analyser. The particle size of the inorganic salt can be controlled (i.e. reduced) by any suitable means, such as dry grinding (e.g. using pin mills) or wet grinding (e.g. using colloid mill).

Suitable inorganic salts include carbonate salts, sulphate salts, silicate salts, chloride salts and any mixtures thereof. Suitable carbonate salts include sodium carbonate, potassium carbonate, magnesium carbonate, and bicarbonate salts such as sodium bicarbonate, potassium bicarbonate and magnesium bicarbonate and any mixtures thereof. Preferably, the carbonate salt has volume average particle size of from 10 micrometers to 80 micrometers, preferably from 20 micrometers, or from 30 micrometers, and preferably to 60 micrometers, or even to 50 micrometers.

Suitable sulphate salts include sodium sulphate, potassium sulphate, magnesium sulphate and mixtures thereof. Preferably, the sulphate salt has a volume average particle size of from 10 micrometers to 80 micrometers, preferably from 20 micrometers, or from 30 micrometers, and preferably to 60 micrometers, or even to 50 micrometers.

Suitable organic detersive surfactants include anionic detersive surfactants, non-ionic detersive surfactant, cationic detersive surfactants, zwitterionic detersive surfactants, amphoteric detersive surfactants, and any combination thereof.

Suitable anionic detersive surfactants include sulphate and sulphonate detersive surfactants. Suitable sulphonate detersive surfactants include alkyl benzene sulphonate, such as C₁₀₋₁₃ alkyl benzene sulphonate. Suitable alkyl benzene sulphonate (LAS) is obtainable, or even obtained, by sulphonating commercially available linear alkyl benzene (LAB); suitable LAB includes low 2-phenyl LAB, such as those supplied by Sasol under the tradename Isochem® or those supplied by Petresa under the tradename Petrelab®, other suitable LAB include high 2-phenyl LAB, such as those supplied by Sasol under the tradename Hyblene®. Another suitable anionic detersive surfactant is alkyl benzene sulphonate that is obtained by DETAL catalyzed process, although other synthesis routes, such as HF, may also be suitable.

Suitable sulphate detersive surfactants include alkyl sulphate, such as C₈₋₁₈ alkyl sulphate, or predominantly C₁₂ alkyl sulphate. The alkyl sulphate may be derived from natural sources, such as coco and/or tallow. Alternative, the alkyl sulphate may be derived from synthetic sources such as C₁₂₋₁₅ alkyl sulphate. Another suitable sulphate detersive surfactant is alkyl alkoxylated sulphate, such as alkyl ethoxylated sulphate, or a C₈₋₁₈ alkyl alkoxylated sulphate, or a C₈₋₁₈ alkyl ethoxylated sulphate. The alkyl alkoxylated sulphate may have an average degree of alkoxylation of from 0.5 to 20, or from 0.5 to 10. The alkyl alkoxylated sulphate may be a C₈₋₁₈ alkyl ethoxylated sulphate, typically having an average degree of ethoxylation of from 0.5 to 10, or from 0.5 to 7, or from 0.5 to 5 or from 0.5 to 3. The alkyl sulphate, alkyl alkoxylated sulphate and alkyl benzene sulphonates may be linear or branched, substituted or un-substituted.

The anionic detersive surfactant may be a mid-chain branched anionic detersive surfactant, such as a mid-chain branched alkyl sulphate and/or a mid-chain branched alkyl benzene sulphonate. The mid-chain branches are typically C₁₋₄ alkyl groups, such as methyl and/or ethyl groups. Another suitable anionic detersive surfactant is alkyl ethoxy carboxylate.

The anionic detersive surfactants are typically present in their salt form, typically being complexed with a suitable cation. Suitable counter-ions include Na⁺ and K⁺, substituted ammonium such as C₁-C₆ alkanolammnonium such as mono-ethanolamine (MEA) triethanolamine (TEA), di-ethanolamine (DEA), and any mixture thereof.

Suitable non-ionic detersive surfactants are selected from the group consisting of: C₈-C₁₈ alkyl ethoxylates, such as, NEODOL® non-ionic surfactants from Shell; C₆-C₁₂ alkyl phenol alkoxylates wherein optionally the alkoxylate units are ethyleneoxy units, propyleneoxy units or a mixture thereof; C₁₂-C₁₈ alcohol and C₆-C₁₂ alkyl phenol condensates with ethylene oxide/propylene oxide block polymers such as Pluronic® from BASF; C₁₄-C₂₂ mid-chain branched alcohols; C₁₄-C₂₂ mid-chain branched alkyl alkoxylates, typically having an average degree of alkoxylation of from 1 to 30; alkylpolysaccharides, such as alkylpolyglycosides; polyhydroxy fatty acid amides; ether capped poly(oxyalkylated) alcohol surfactants; and mixtures thereof. Suitable non-ionic detersive surfactants are alkyl polyglucoside and/or an alkyl alkoxylated alcohol.

Suitable non-ionic detersive surfactants include alkyl alkoxylated alcohols, such as C₈₋₁₈ alkyl alkoxylated alcohol, or a C₈₋₁₈ alkyl ethoxylated alcohol. The alkyl alkoxylated alcohol may have an average degree of alkoxylation of from 0.5 to 50, or from 1 to 30, or from 1 to 20, or from 1 to 10. The alkyl alkoxylated alcohol may be a C₈₋₁₈ alkyl ethoxylated alcohol, typically having an average degree of ethoxylation of from 1 to 10, or from 1 to 7, or from 1 to 5, or from 3 to 7. The alkyl alkoxylated alcohol can be linear or branched, and substituted or un-substituted.

Suitable nonionic detersive surfactants include secondary alcohol-based detersive surfactants having the formula: 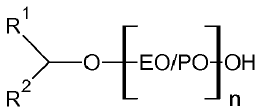 wherein R¹ = linear or branched, substituted or unsubstituted, saturated or unsaturated C₂₋₈ alkyl; wherein R² = linear or branched, substituted or unsubstituted, saturated or unsaturated C₂₋₈ alkyl, wherein the total number of carbon atoms present in R¹ + R² moieties is in the range of from 7 to 13; wherein EO/PO are alkoxy moieties selected from ethoxy, propoxy, or mixtures thereof, optionally the EO/PO alkoxyl moieties are in random or block configuration; wherein n is the average degree of alkoxylation and is in the range of from 4 to 10.

Other suitable non-ionic detersive surfactants include EO/PO block co-polymer surfactants, such as the Plurafac^{®} series of surfactants available from BASF, and sugar-derived surfactants such as alkyl N-methyl glucose amide.

Suitable cationic detersive surfactants include alkyl pyridinium compounds, alkyl quaternary ammonium compounds, alkyl quaternary phosphonium compounds, alkyl ternary sulphonium compounds, and mixtures thereof.

Suitable cationic detersive surfactants are quaternary ammonium compounds having the general formula:

(R)(R₁)(R₂)(R₃)N⁺ X⁻

wherein, R is a linear or branched, substituted or unsubstituted C₆₋₁₈ alkyl or alkenyl moiety, R₁ and R₂ are independently selected from methyl or ethyl moieties, R₃ is a hydroxyl, hydroxymethyl or a hydroxyethyl moiety, X is an anion which provides charge neutrality, suitable anions include: halides, such as chloride; sulphate; and sulphonate. Suitable cationic detersive surfactants are mono-C₆₋₁₈ alkyl mono-hydroxyethyl di-methyl quaternary ammonium chlorides. Suitable cationic detersive surfactants are mono-C₈₋₁₀ alkyl mono-hydroxyethyl di-methyl quaternary ammonium chloride, mono-C₁₀₋₁₂ alkyl mono-hydroxyethyl di-methyl quaternary ammonium chloride and mono-C₁₀ alkyl mono-hydroxyethyl di-methyl quaternary ammonium chloride.

Suitable zwitterionic and/or amphoteric detersive surfactants include amine oxide such as dodecyldimethylamine N-oxide, alkanolamine sulphobetaines, coco-amidopropyl betaines, HN⁺-R-CO₂- based surfactants, wherein R can be any bridging group, such as alkyl, alkoxy, aryl or amino acids.

The spray-dried laundry detergent particles typically comprise essentially no zeolite: they are typically essentially free of zeolite builder. Essential free of zeolite builder typically means comprises from 0wt% to 4wt%, or to 3wt%, or to 2wt%, or even to 1wt% zeolite builder. Essentially free of zeolite builder preferably means comprises no deliberately added zeolite builder. Typical zeolite builders include zeolite A, zeolite P, zeolite MAP, zeolite X and zeolite Y.

The spray-dried laundry detergent particles comprise essentially no phosphate builder: they are typically essentially free of phosphate builder. Essential free of phosphate builder typically means comprises from 0wt% to 4wt%, or to 3wt%, or to 2wt%, or even to 1wt% phosphate builder. Essentially free of phosphate builder preferably means comprises no deliberately added phosphate builder. Typical phosphate builders include sodium tripolyphosphate (STPP).

The spray-dried laundry detergent particles comprise essentially no bleach; they are essentially free of bleach. Essentially free of bleach typically means comprises from 0wt% to 4wt%, or to 3wt%, or to 2wt%, or even to 1wt% bleach. Essentially free of bleach preferably means comprises no deliberately added bleach. Typical bleach ingredients include bleach activators, sources of available oxygen, pre-formed peracids, bleach catalysts, reducing bleach, and any combination thereof.

The spray-dried laundry detergent particles may comprise essentially no chelant; they are essentially free of chelant. Essentially free of chelant typically means comprises from 0wt% to 4wt%, or to 3wt%, or to 2wt%, or even to 1wt% chelant. Essentially free of chelant preferably means comprises no deliberately added chelant. Typical chelant ingredients include diethylene triamine pentaacetate, diethylene triamine penta(methyl phosphonic acid), ethylene diamine-N'N'-disuccinic acid (EDDS), ethylene diamine tetraacetate, ethylene diamine tetra(methylene phosphonic acid), hydroxyethane di(methylene phosphonic acid), and any combination thereof. A suitable chelant is ethylene diamine-N'N'-disuccinic acid (EDDS) and/or hydroxyethane diphosphonic acid (HEDP).

Suitable carboxylate polymers include maleate/acrylate random copolymer or polyacrylate homopolymer. The carboxylate polymer may be a polyacrylate homopolymer having a molecular weight of from 4,000 Da to 9,000 Da, or from 6,000 Da to 9,000 Da. Other suitable carboxylate polymers are co-polymers of maleic acid and acrylic acid, and may have a molecular weight in the range of from 4,000 Da to 90,000 Da.

Suitable detergent ingredients include: detersive surfactants including anionic detersive surfactants, non-ionic detersive surfactants, cationic detersive surfactants, zwitterionic detersive surfactants, amphoteric detersive surfactants, and any combination thereof; polymers including carboxylate polymers, polyethylene glycol polymers, polyester soil release polymers such as terephthalate polymers, amine polymers, cellulosic polymers, dye transfer inhibition polymers, dye lock polymers such as a condensation oligomer produced by condensation of imidazole and epichlorhydrin, optionally in ratio of 1:4:1, hexamethylenediamine derivative polymers, and any combination thereof; builders including zeolites, phosphates, citrate, and any combination thereof; buffers and alkalinity sources including carbonate salts and/or silicate salts; fillers including sulphate salts and bio-filler materials; bleach including bleach activators, sources of available oxygen, pre-formed peracids, bleach catalysts, reducing bleach, and any combination thereof; chelants; photobleach; hueing agents; brighteners; enzymes including proteases, amylases, cellulases, lipases, xylogucanases, pectate lyases, mannanases, bleaching enzymes, cutinases, and any combination thereof; fabric softeners including clay, silicones, quaternary ammonium fabric-softening agents, and any combination thereof; flocculants such as polyethylene oxide; perfume including starch encapsulated perfume accords, perfume microcapsules, perfume loaded zeolites, schif base reaction products of ketone perfume raw materials and polyamines, blooming perfumes, and any combination thereof; aesthetics including soap rings, lamellar aesthetic particles, geltin beads, carbonate and/or sulphate salt speckles, coloured clay, and any combination thereof: and any combination thereof.

In another embodiment, the present invention provides a laundry detergent composition comprising the spray-dried particles of the present invention. Typically, the laundry detergent composition is a fully formulated laundry detergent composition, not a portion thereof such as a spray-dried particle that only forms part of the laundry detergent composition.. However, it is within the scope of the present invention for an additional rinse additive composition (e.g. fabric conditioner or enhancer), or a main wash additive composition (e.g. bleach additive) to also be used in combination with the laundry detergent composition during the laundering process. Although, it may be preferred for no bleach additive composition is used in combination with the laundry detergent composition during the laundering process.

Typically, the laundry detergent composition comprises a plurality of chemically different particles, such as the spray-dried laundry detergent particles of the present invention that typically form the base laundry detergent particles, to which other particle such as agglomerated detergent particles and/or extruded detergent particles are combined. Typically, the spray-dried laundry detergent particles are combined with an additional one or more, typically two or more, or three or more, or four or more, or five or more, or six or more, or even ten or more particles selected from: surfactant particles, including surfactant agglomerates, surfactant extrudates, surfactant needles, surfactant noodles, surfactant flakes; polymer particles such as cellulosic polymer particles, polyester particles, polyamine particles, terephthalate polymer particles, polyethylene glycol polymer particles; builder particles, such as sodium carbonate and sodium silicate co-builder particles, phosphate particles, zeolite particles, silicate salt particles, carbonate salt particles; filler particles such as sulphate salt particles; dye transfer inhibitor particles; dye fixative particles; bleach particles, such as percarbonate particles, especially coated percarbonate particles, such as percarbonate coated with carbonate salt, sulphate salt, silicate salt, borosilicate salt, or any combination thereof, perborate particles, bleach catalyst particles such as transition metal bleach catalyst particles, or oxaziridinium-based bleach catalyst particles, pre-formed peracid particles, especially coated pre-formed peracid particles, and co-bleach particles of bleach activator, source of hydrogen peroxide and optionally bleach catalyst; bleach activator particles such as oxybenzene sulphonate bleach activator particles and tetra acetyl ethylene diamine bleach activator particles; chelant particles such as chelant agglomerates; hueing dye particles; brightener particles; enzyme particles such as protease prills, lipase prills, cellulase prills, amylase prills, mannanase prills, pectate lyase prills, xyloglucanase prills, bleaching enzyme prills, cutinase prills and co-prills of any of these enzymes; clay particles such as montmorillonite particles or particles of clay and silicone; flocculant particles such as polyethylene oxide particles; wax particles such as wax agglomerates; perfume particles such as perfume microcapsules, especially melamine formaldehyde-based perfume microcapsules, starch encapsulated perfume accord particles, and pro-perfume particles such as Schiff base reaction product particles; aesthetic particles such as coloured noodles or needles or lamellae particles, and soap rings including coloured soap rings; and any combination thereof.

In another embodiment of the present invention, there is provided a process for preparing the spray-dried laundry detergent composition. The process typically comprises the step of preparing a detergent slurry, and spray-drying the detergent slurry to form the spray-dried laundry detergent particles.

### EXAMPLES

### Example 1: preparation of spray-dried laundry detergent particles (comparative example)

An aqueous alkaline laundry detergent slurry comprising: water, alkyl benzene sulphonate, sodium silicate; acrylic/maleic acid co-polymer, sodium sulphate, sodium carbonate, magnesium sulphate, 1-hydroxy ethylidene-1,1-diphosphonic acid (HEDP), and ethylene diamine disuccinic acid (EDDS) is prepared. This aqueous slurry is sprayed into a counter current spray drying tower and spray-dried to produce spray-dried laundry detergent particles. In this example, the sodium sulphate used was standard (unmilled) grade having a volume average particle size in the range of from 200 micrometers to 250 micrometers, and the sodium carbonate was standard (unmilled) grade having a volume average particle size of 300 micrometers. This is Powder A: comparative example spray-dried laundry detergent particles that are not in accordance with the present invention.

### Example 2: preparation of spray-dried laundry detergent particles (in accordance with the present invention)

Example 1 was repeated except that the standard grade sodium sulphate was replaced with fine grade sodium sulphate that has passed a pin mill grinding unit to produce a volume average particle size of 40 micrometers, and the standard grade sodium carbonate was replaced with fine grade sodium carbonate having a volume average particle size of 40 micrometers. This is Powder B: spray-dried laundry detergent particles that are in accordance with the present invention.

### Example 3: physical features of the spray-dried laundry detergent particles

Both Powder A and Powder B have similar bulk densities, and the same particle size distribution: namely, a bulk density of 467 g/l (± 10g/l) and a particle size distribution such that 15wt% of the spray-dried powder has a particle size of below 250 micrometers (small particles), and 85wt% of the spray-dried powder has a particle size of from 250 micrometers or greater (large particles).

### Example 4: chemical composition of the spray-dried laundry detergent particles

Both Powder A and Powder B have the same bulk chemical composition, namely: 15.6wt% alkyl benzene sulphonate, 8.3wt% sodium silicate, 4.2wt% acrylic/maleic acid co-polymer, 44.6wt% sodium sulphate, 22.8wt% sodium carbonate, 1.3wt% magnesium sulphate, 0.6wt% 1-hydroxy ethylidene-1,1-diphosphonic acid (HEDP), 0.4wt% ethylene diamine disuccinic acid (EDDS), 2wt% water and 2.2wt% miscellaneous.

### Example 5: organic carbon content

Separately, Powder A and Powder B are sieved through a 250 micrometer sieve and both fractions (small (<250µm) and large (≥250µm) particles) are collected separately. The organic carbon content of these fractions is shown below:

| | **Organic carbon content in weight percent of particle fractions** | |
|---|---|---|
| | **Particle size <250µm** | **Particle size >250µm** |
| **Powder A (comparative)** | 14.19 | 11.00 |
| **Powder B (invention)** | 11.28 | 11.00 |

| | | |
|---|---|---|
| For Powder A (comparative), the ratio of the organic carbon content of the small particles in weight percent to the organic carbon content of the large particles in weight percent is 1.29, which is outside of the claim scope of the present invention. For Powder B (invention), the ratio of the organic carbon content of the small particles in weight percent to the organic carbon content of the large particles in weight percent is 1.03, which is in accordance with the claim scope of the present invention. | | |

### Example 6: consolidated bulk density test

The consolidated bulk density of a powder is its bulk density under applied normal load. The consolidated bulk density profiles of Powders A (comparative) and B (invention) are determined by the following method: The powder samples are over-filled into the shear cell of a Peschl Shear Tester. Overfill of the powder sample in the shear cell is removed (by scraping) such that the height of the powder sample is flat against the opening of the shear cell. The weight of the powder sample in the shear cell is then recorded. The shear cell is then placed into the shear tester; where the first lowest normal load (2kPa) is applied for 15 minutes to allow the powder samples to achieve density equilibrium, this consolidated bulk density is then recorded. The next highest normal load is applied, and the technique is repeated for 5kPa, 8kPa, 15kPa and 25kPa normal loads respectively. The consolidated bulk density is calculated automatically from the powder sample weight, the fixed volume of the shear cell and the vertical displacement of the piston into the shear cell on application of the normal load. The consolidated bulk density profiles of Powders A (comparative) and B (invention) are shown below:

| | **Consolidated bulk density (g/l)** | | | | |
|---|---|---|---|---|---|
| | **Normal load 2kPa** | **Normal load 5kPa** | **Normal load 8kPa** | **Normal load 15kPa** | **Normal load 25kPa** |
| **Powder A (comparative)** | 472 | 477 | 480 | 488 | 504 |
| **Powder B (invention)** | 462 | 466 | 469 | 474 | 481 |

The same consolidated bulk density data is illustrated graphically below:

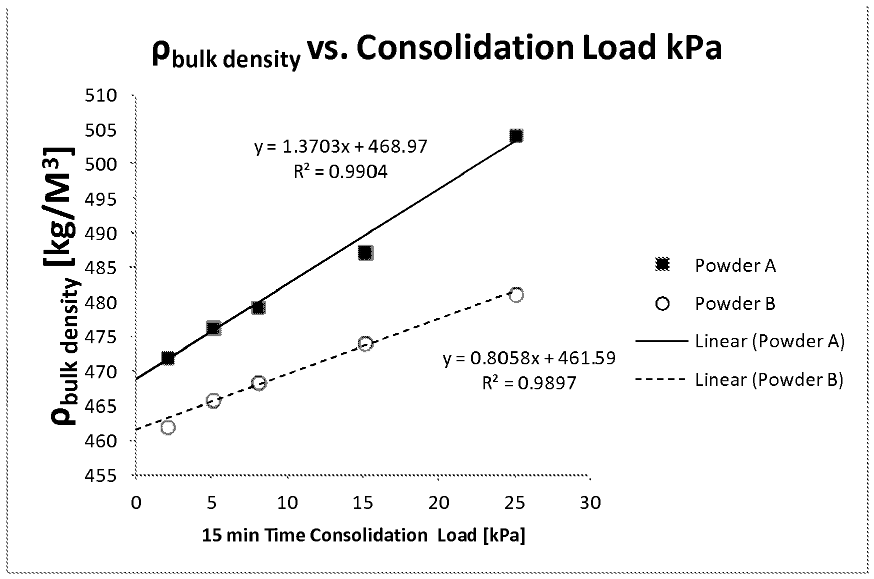

The above data shows that the increase in consolidated bulk density due to the applied normal load for Powder B (invention) is lower than that for Powder A (comparative). This change in consolidated bulk density data is shown below:

| | **Change in consolidated bulk density vs. initial (g/l)** | | | | |
|---|---|---|---|---|---|
| | **Normal load 2kPa** | **Normal load 5kPa** | **Normal load 8kPa** | **Normal load 15kPa** | **Normal load 25kPa** |
| **Powder A (comparative)** | 3.26 | 4.28 | 3.06 | 7.95 | 16.83 |
| **Powder B (invention)** | 0.55 | 3.98 | 2.45 | 5.71 | 6.93 |

The same change in consolidated bulk density data is illustrated graphically below:

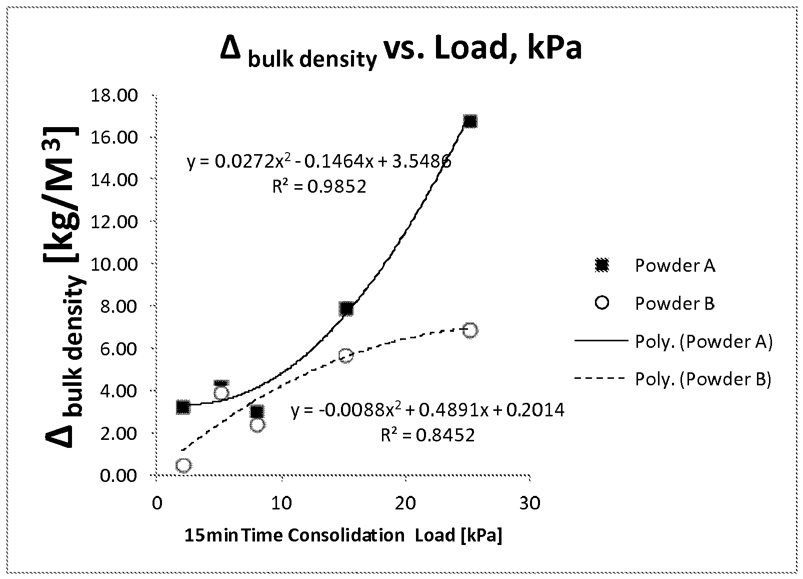

These consolidated bulk density results show significantly lower response for powder B (invention) in comparison to powder A (comparative). This lower consolidated bulk density response in powder B (invention) leads to lower variation in consolidated bulk density during manufacturing operations, especially plant packaging, which in turn leads to improved efficiency in detergent powder processing compared to powder A (comparative).

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. Spray-dried laundry detergent particles comprising:
(a) organic detersive surfactant;
(b) inorganic salt;
(c) essentially no zeolite builder;
(d) essentially no phosphate builder;
(e) essentially no bleach; and
(f) other detergent ingredients,
wherein from 5wt% to 25wt% of the particles are small particles having a particle size of less than 250 micrometers,
wherein from 75wt% to 95wt% of the particles are large particles having a particle size of 250 micrometers or greater, and
wherein the ratio of the organic carbon content of the small particles in weight percent to the organic carbon content of the large particles in weight percent is in the range of from 1.00 to 1.20.

2. Particles according to claim 1, wherein the ratio of the organic carbon content of the small particles in weight percent to the organic carbon content of the large particles in weight percent is in the range of from 1.00 to 1.10.

3. Particles according to any preceding claim, wherein the particles comprise alkyl benzene sulphonate anionic detersive surfactant.

4. Particles according to any preceding claim, wherein the particles comprise carboxylate polymer.

5. Particles according to any preceding claim, wherein the inorganic salt is in particulate form having a volume average particle size of from 20 micrometers to 50 micrometers.

6. Particles according to any preceding claim, wherein the particles comprise carbonate salt wherein the carbonate salt has a volume average particle size of from 20 micrometers to 50 micrometers.

7. Particles according to any preceding claim, wherein the particles comprise sulphate salt, wherein the sulphate salt has a volume average particle size of from 20 micrometers to 50 micrometers.

8. Particles according to any preceding claim, wherein the particles comprise from above 0wt% to 2wt% chelant.

9. A laundry detergent composition comprising spray-dried particles according to any preceding claim.

10. A process of preparing spray-dried particles according to any of claims 1 to 8.
